# EUROPEAN PATENT SPECIFICATION

(11) **EP 3 611 998 B1**
(45) Date of publication and mention of the grant of the patent: **10.04.2024**
(21) Application number: 19193847.1
(22) Date of filing: 24.08.2017
(51) Int. Cl.: H05B 3/22, F24D 13/02, H05B 3/34, H05B 1/02

(54) **HEATED PTC ELEMENT WITH PROTECTION CIRCUIT**
BEHEIZTES PTC-ELEMENT MIT SCHUTZSCHALTUNG
ÉLÉMENT PTC CHAUFFÉ AVEC CIRCUIT DE PROTECTION

(30) Priority: 01.09.2016 US 201615254023
(43) Date of publication of application: 19.02.2020
(62) Divisional of application: 17187649.3
(73) Proprietor: Hamilton Sundstrand Corporation, Charlotte, NC 28217-4578 (US)
(72) Inventor: SHEARER, Jon, Hartville, OH 44632 (US)
(74) Representative: Dehns

(56) References cited:
- EP-A1- 3 015 360
- EP-A2- 2 199 063
- DE-A1-102008 006 017
- US-A- 5 361 183
- US-A1- 2010 065 542
- US-A1- 2011 149 447

## Description

### BACKGROUND OF THE INVENTION

This application relates to a heated floor panel having a fault protection circuit.

Heated floor panels are known and utilized in any number of applications. One proposed application is in an aircraft cabin. In particular, a location near an aircraft door is being considered to be provided with such panels.

One type of heated floor panel is a positive temperature coefficient ("PTC") panel. Such panels are formed of a material that heats when provided with electric current. Conductors are interlaced within a substrate of PTC material and current is supplied to the conductors, which, in turn, causes the substrate to heat.

There are concerns with these panels, particularly, as occupants of the aircraft cabin are exposed to the panels. One concern has to do with shock hazards or dielectric breakdown, which can lead to arcing or smoke damage. As an example, if the panel is damaged, the PTC could be compromised. US2010/065542 A1 relates to an electrical heater with a resistive neutral plane. US5361183 A1 relates to ground fault protection for electrothermal de-icing applications.

### SUMMARY OF THE INVENTION

A heated floor panel with an electrical short protection arrangement as defined in claim 1 is provided. Further embodiments are inter alia disclosed in the dependent claims.

These and other features may be best understood from the following drawings and specification, the following of which is a brief description.

### BRIEF DESCRIPTION OF THE DRAWINGS

Figure 1A schematically shows a heated floor panel in an aircraft.
Figure 1B shows a safety circuit.
Figure 2 shows an example of damage to a panel.
Figure 3 shows a first location for the safety circuit.
Figure 4 shows an alternative location.

### DETAILED DESCRIPTION

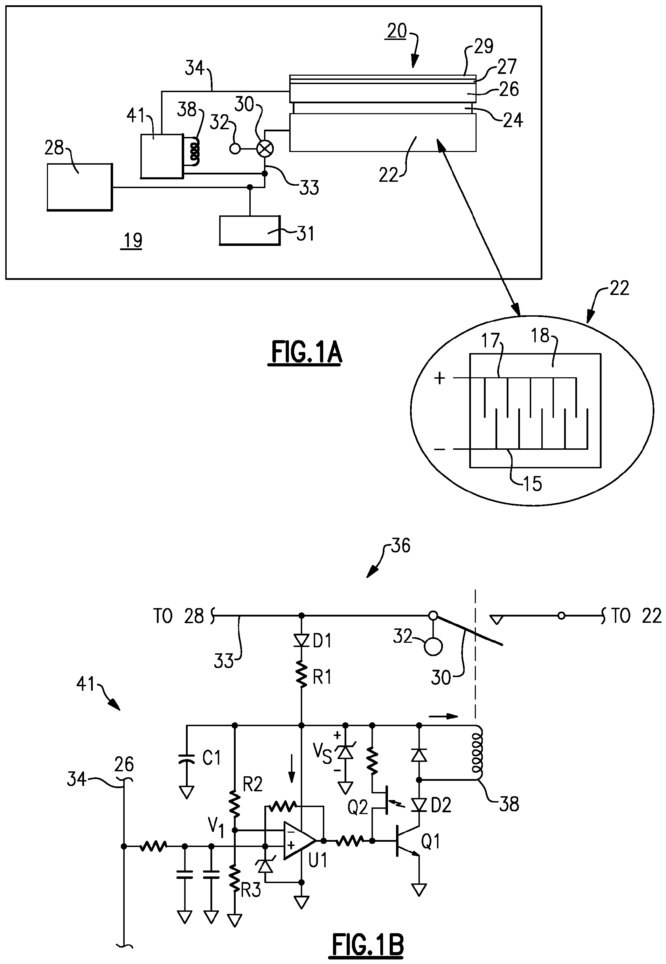

Figure 1A shows an aircraft cabin 19 schematically. A heated floor panel 20 is located in an aircraft cabin. As an example, the heated floor panel 20 may be placed near an aircraft door. The heated floor panel 20 includes a heating layer 22 including conductors 15 and 17 and a substrate 18 of a PTC material that will heat when exposed to the current from conductors 15 and 17.

Heated floor panels are generally known. The heating layer 22 is formed of a substrate that may be any number of materials. As examples, a carbon-loaded silicone-based film may be utilized. Alternatively, an ink/paste layer may be utilized as the substrate. Further, a PTC material may coat a fabric. The spacing of the conductors is designed based upon desired heat-up rates, power density, and heating patterns. The PTC substrate is tailored through chemistry, thickness, length, etc. to control heater performance.

In general, a PTC heating layer is characterized as reaching a desired temperature. At the point it reaches its desired temperature, the resistance of the substrate increases greatly which will limit the flow of power to the heater. Thus, a PTC heating layer could be characterized as operating around a steady-state design temperature.

An insulating layer 24 separates the heating layer 22 from an electrically conductive layer 26. The layer 26 can be a guard screen or a film. The insulating layer 24 may be a dielectric material. Another insulating layer 27 and an outer skin 29 may be included.

Power is supplied from 28 to the heating layer 22. A control 31 controls the amount of current flowing through a supply line 33 to the heating layer 22.

A protection circuit 41 is shown mounted on supply line 33. A switch 30 is downstream of protection circuit 41. Protection circuit 41 may be provided with a transformer 38 that can operate an optical latch circuit 32 to open the switch 30 under certain conditions. As shown, line 31 communicates layer 26 to circuit 41.

Figure 1B shows an example protection circuit 41. When current flows through the line 33, power from 28 energizes Vs through D₁, R₁, and C₁. A voltage V₁ is developed across R₃ for reference to U₁ minus an input. As shown, circuit 41 also communicates with layer 26 through line 34. If current flows into 26 (as explained below), then a conductive layer 26 voltage may exceed V₁. If so, U₁ will activate Q₁ and coil 38 which opens switch 30. Optical light from D₂ activates Q₂, latching Q₁ on, holding coil 38 active, and switch 30 open until power from 28 is removed. Any other circuit that can operate to open a switch should current flow in layer 26 may be utilized.

As long as the insulation layer 24 sits between the conductive layer 26 and heating layer 22, no voltage will exist on line 34. Under these conditions, the circuit 41 will not open the switch 30. Thus, the heated floor panel 20 can operate to heat a floor.

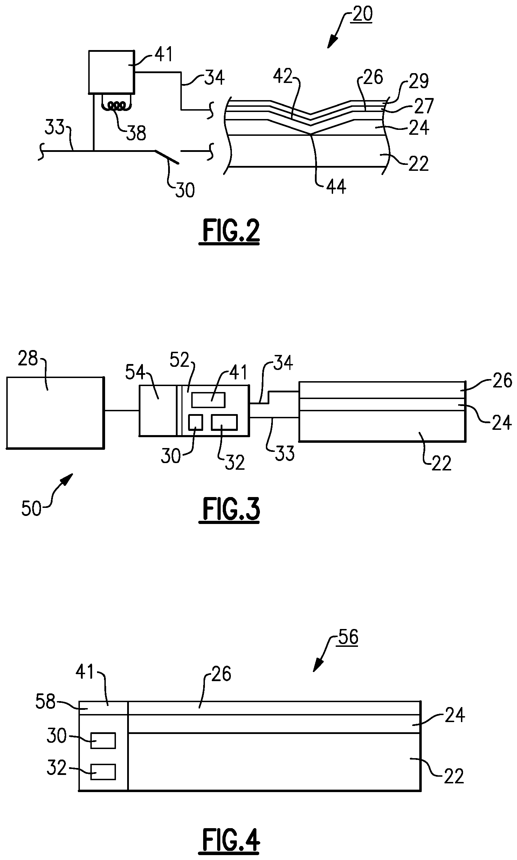

Figure 2 shows damage 42 to the heated floor panel 20. Perhaps a knife or heavy object has been dropped on the panel. As shown, a point 44 exists where the conductive layer 26 is now in contact with the heating layer 22. This will cause current flow into conductive layer 26.

At such a point, the circuit 41 will see the voltage on line 34 and open the switch 30, as shown.

This will stop current flow from source 28 to the heating layer 22. Once power is shut off, the switch 30 will return to a closed position and the panel can be repaired or otherwise evaluated.

Figure 3 shows a first potential location wherein the protection circuit 41, the switch 30, and the control 31 are all placed within a portion 52 of a connector that is connected at 54 to the power supply 28.

Figure 4 shows an alternative embodiment 56 wherein a side compartment 58 receives the protection circuit 41, switch 30, and control 31.

While a heated floor panel is utilized, the protective benefits of this disclosure may extend to other PTC heater applications.

The protection features of this disclosure would benefit other type heating layers than just PTC heaters. Also, protection circuits that stop the supply of electrical energy to the heating layer in ways other than opening a switch may come within the scope of this disclosure.

Thus, the disclosure could be broadly stated as comprising a heater electrical short protection arrangement having a heating layer being at least partially electrically conductive. A conductive layer initially electrically insulated from the heating layer. A circuit in electrical communication with the conductive layer configured to halt a supply of electrical energy to the heating layer in response to current flowing into the conductive layer.

Although an embodiment of this invention has been disclosed, a worker of ordinary skill in this art would recognize that certain modifications are possible to be made, without departing from the scope of the present invention, which is defined by the appended claims.

## Claims

1. A heated floor panel with an electrical short protection arrangement comprising:
a heating layer (22) being at least partially electrically conductive;
a conductive layer (26) initially electrically insulated from the heating layer;
a protection circuit (41) in electrical communication with the conductive layer configured to halt a supply of electrical energy to the heating layer in response to current flowing into the conductive layer; **characterized in that**
said heating layer includes electric conductors (15, 17) and a substrate (18) formed of a positive temperature coefficient material, and said heating layer (22) having a design temperature and a resistance of said heating layer increasing when said design temperature is reached; and
**in that** said protection circuit is configured to receive a current signal from said conductive layer, said conductive layer being connected to said protection circuit by a line, wherein no current signal is present on the line when no current is communicated into the conductive layer, wherein the protection circuit is configured to open a switch to stop the supply of energy to the heating layer when a current signal is sent to the protection circuit by the conductive layer.

2. The heated floor panel as set forth in claim 1, wherein said heating layer has a positive coefficient material.

3. The heated floor panel as set forth in claim 1 or 2, wherein said circuit includes a transformer (38) to open said switch if current flows into said conductive layer.

4. The heated floor panel as set forth in claim 1 or 2, wherein said switch is on a line connecting a power supply (28) to said heating layer.

5. The heated floor panel as set forth in any preceding claim, wherein said conductive layer is a guard screen, or wherein said conductive layer is a film.

6. The heated floor panel as set forth in any preceding claim, wherein an insulating layer (24) is included between said heating layer and said conductive layer.

7. The heated floor panel as set forth in any preceding claim, wherein the protection circuit opens the switch through an optical latch circuit when a current signal is received from the conductive layer.

8. The heated floor panel as set forth in claim 7, wherein if a current signal is received on the line from the conductive layer, a coil is activated and optical light will open the optical latch circuit.

## Patentansprüche

1. Beheizte Bodenplatte mit einer Schutzanordnung vor elektrischem Kurzschluss, umfassend:
eine Heizschicht (22), die zumindest teilweise elektrisch leitfähig ist;
eine leitfähige Schicht (26), die anfänglich von der Heizschicht elektrisch isoliert ist;
eine Schutzschaltung (41) in elektrischer Verbindung mit der leitfähigen Schicht, die dazu konfiguriert ist, als Reaktion auf einen Stromfluss in die leitfähige Schicht eine Zufuhr elektrischer Energie zu der Heizschicht anzuhalten; **dadurch gekennzeichnet, dass**
die Heizschicht elektrische Leiter (15, 17) und ein Substrat (18) beinhaltet, das aus einem Material mit positivem Temperaturkoeffizienten gebildet ist, und die Heizschicht (22) eine Solltemperatur und einen Widerstandswert der Heizschicht aufweist, der zunimmt, wenn die Solltemperatur erreicht ist; und
dadurch, dass die Schutzschaltung dazu konfiguriert ist, ein Stromsignal von der leitfähigen Schicht zu empfangen, wobei die leitfähige Schicht über eine Leitung mit der Schutzschaltung verbunden ist, wobei kein Stromsignal an der Leitung vorhanden ist, wenn kein Strom in die leitfähige Schicht übermittelt wird, wobei die Schutzschaltung dazu konfiguriert ist, einen Schalter zu öffnen, um die Energiezufuhr zu der Heizschicht zu stoppen, wenn ein Stromsignal durch die leitfähige Schicht an die Schutzschaltung gesendet wird.

2. Beheizte Bodenplatte nach Anspruch 1, wobei die Heizschicht ein Material mit positivem Koeffizienten aufweist.

3. Beheizte Bodenplatte nach Anspruch 1 oder 2, wobei die Schaltung einen Transformator (38) beinhaltet, um den Schalter zu öffnen, wenn Strom in die leitfähige Schicht fließt.

4. Beheizte Bodenplatte nach Anspruch 1 oder 2, wobei sich der Schalter an einer Leitung befindet, die eine Leistungsversorgung (28) mit der Heizschicht verbindet.

5. Beheizte Bodenplatte nach einem der vorhergehenden Ansprüche, wobei die leitfähige Schicht ein Schutzschirm ist oder wobei die leitfähige Schicht eine Folie ist.

6. Beheizte Bodenplatte nach einem der vorhergehenden Ansprüche, wobei eine Isolierschicht (24) zwischen der Heizschicht und der leitfähigen Schicht beinhaltet ist.

7. Beheizte Bodenplatte nach einem der vorhergehenden Ansprüche, wobei die Schutzschaltung den Schalter über eine optische Sperrschaltung öffnet, wenn ein Stromsignal von der leitfähigen Schicht empfangen wird.

8. Beheizte Bodenplatte nach Anspruch 7, wobei eine Spule aktiviert wird und optisches Licht die optische Sperrschaltung öffnet, wenn ein Stromsignal von der leitfähigen Schicht an der Leitung empfangen wird.

## Revendications

1. Panneau de plancher chauffé avec un dispositif de protection contre les courts-circuits électriques comprenant :
une couche chauffante (22) qui est au moins partiellement conductrice d'électricité ;
une couche conductrice (26) initialement isolée électriquement de la couche chauffante ;
un circuit de protection (41) en communication électrique avec la couche conductrice configuré pour arrêter une alimentation en énergie électrique à la couche chauffante en réponse au courant circulant dans la couche conductrice ; **caractérisé en ce que**
ladite couche chauffante comporte des conducteurs électriques (15, 17) et un substrat (18) formé d'un matériau à coefficient de température positif, et ladite couche chauffante (22) ayant une température de conception et une résistance de ladite couche chauffante augmentant lorsque ladite température de conception est atteinte ; et
**en ce que** ledit circuit de protection est configuré pour recevoir un signal de courant provenant de ladite couche conductrice, ladite couche conductrice étant connectée audit circuit de protection par une ligne, dans lequel aucun signal de courant n'est présent sur la ligne lorsqu'aucun courant n'est communiqué dans la couche conductrice, dans lequel le circuit de protection est configuré pour ouvrir un commutateur afin d'arrêter l'alimentation en énergie de la couche chauffante lorsqu'un signal de courant est envoyé au circuit de protection par la couche conductrice.

2. Panneau de plancher chauffé selon la revendication 1, dans lequel ladite couche chauffante a un matériau à coefficient positif.

3. Panneau de plancher chauffé selon la revendication 1 ou 2, dans lequel ledit circuit comporte un transformateur (38) pour ouvrir ledit commutateur si le courant circule dans ladite couche conductrice.

4. Panneau de plancher chauffé selon la revendication 1 ou 2, dans lequel ledit commutateur se trouve sur une ligne reliant une alimentation électrique (28) à ladite couche chauffante.

5. Panneau de plancher chauffé selon une quelconque revendication précédente, dans lequel ladite couche conductrice est un écran de protection, ou dans lequel ladite couche conductrice est un film.

6. Panneau de plancher chauffé selon une quelconque revendication précédente, dans lequel une couche isolante (24) est incluse entre ladite couche chauffante et ladite couche conductrice.

7. Panneau de plancher chauffé selon une quelconque revendication précédente, dans lequel le circuit de protection ouvre le commutateur via un circuit de verrouillage optique lorsqu'un signal de courant est reçu de la couche conductrice.

8. Panneau de plancher chauffé selon la revendication 7, dans lequel si un signal de courant est reçu sur la ligne provenant de la couche conductrice, une bobine est activée et la lumière optique ouvrira le circuit de verrouillage optique.
